# FASCICULE DE BREVET EUROPEEN

(11) **EP 2 185 824 B1**
(45) Date de publication et mention de la délivrance du brevet: **18.05.2011**
(21) Numéro de dépôt: 08830007.4
(22) Date de dépôt: 22.08.2008
(51) Int. Cl.: F16B 5/02, F16B 37/00, F16F 7/108, F16F 7/10

(54) **DISPOSITIF DE MONTAGE D'UN OBJET SUR UNE PAROI IMPLIQUANT UNE PIECE INTERMEDIAIRE**
VORRICHTUNG ZUR ANBRINGUNG EINES OBJEKTS AN EINER WAND MITHILFE EINES ZWISCHENSTÜCKS
DEVICE FOR MOUNTING AN OBJECT ON A WALL VIA AN INTERMEDIATE PART

(30) Priorité: 12.09.2007 FR 0757535
(43) Date de publication de la demande: 19.05.2010
(73) Titulaire: Peugeot Citroën Automobiles SA, 78140 Vélizy Villacoublay (FR)
(72) Inventeur: DUSI, Jacques, F-77220 Gretz Armainvilliers (FR); BOURDIN, Loic, F-95870 Bezons (FR)
(86) Numéro de dépôt international: PCT/FR2008/051523
(87) Numéro de publication internationale: WO 2009/034281

(56) Documents cités:
- FR-A- 2 820 795
- US-A- 1 385 799
- US-A1- 2007 154 287

## Description

Le domaine technique de l'invention concerne les dispositifs de montage d'un objet, permettant un démontage aisé de celui-ci, malgré un environnement encombré, créé après le montage dudit objet. En effet, dans le cas, par exemple, d'un véhicule automobile, il arrive qu'une première pièce implantée sous le capot, soit recouverte par une deuxième pièce ou du matériel ajouté, rendant impossible un démontage simple de la première pièce, à partir de l'endroit où elle a été implantée. L'objet de l'invention, est de proposer un dispositif de montage ayant pour fonction, d'une part, d'assurer une implantation facile d'une pièce à partir d'un endroit donné, et, d'autre part, d'assurer, tout aussi aisément, son démontage, par un autre endroit. Les dispositifs de montage selon l'invention, sont particulièrement adaptés aux véhicules automobiles, pour notamment, la fixation d'actionneurs pilotés.

Les dispositifs de montage de systèmes antivibratoires sur la caisse d'un véhicule automobile existent déjà et ont fait l'objet de brevet. On peut, par exemple, citer le brevet JP 2004169913 comme l'état de la technique plus proche, qui se rapporte à un dispositif de montage d'un système antivibratoire sur une caisse de véhicule, impliquant deux vis de fixation. De cette manière, dans le cas d'une rupture accidentelle de l'une des deux vis, l'autre vis permet de maintenir ledit système solidaire de ladite caisse, et empêche donc sa chute. Dans la configuration décrite dans ce brevet, les deux vis sont fixées à une même paroi de la caisse du véhicule.

Les dispositifs de montage selon l'invention, sont adaptés aux environnements encombrés, tels que les parties avant de véhicules automobiles renfermant le moteur, car ils permettent, d'une part, de fixer une pièce à partir d'une voie d'accès donnée, et, d'autre part, de démonter ladite pièce par une autre voie d'accès, ces voies étant guidées par la géométrie complexe de l'environnement sous le capot. En effet, il arrive souvent qu'une pièce, qui vient d'être implantée aisément sur une structure, par une voie d'accès privilégiée, soit recouverte ensuite, par d'autres pièces ou matériels, rendant alors le démontage de cette pièce difficile, voire impossible, par cette même voie. Il peut alors être intéressant d'utiliser un autre chemin d'accès pour démonter ladite pièce.

La présente invention a pour objet un ensemble comportant un actionneur antivibratoire, une paroi d'une caisse d'un véhicule automobile et un dispositif de montage de l'actionneur antivibratoire sur la paroi selon la revendication 1.
Les autres caractéristiques de l'invention sont décrites par les revendications dépendantes.

L'ensemble selon l'invention présente l'avantage d'être peu encombrant, dans la mesure où la pièce intermédiaire est légère et de faible dimension, et dans la mesure où les vis sont arrangées de manière à occuper le moins d'espace possible. Il est facile, à fabriquer et à mettre au point, car la pièce intermédiaire, qui constitue la principale caractéristique dudit ensemble, possède une forme simple ne nécessitant aucun usinage complexe et coûteux.

On donne ci-après une description détaillée d'un mode de réalisation préféré d'un ensemble selon l'invention en se référant aux figures 1 à 2.
- La figure 1 est une vue axiale longitudinale d'un actionneur antivibratoire et de son dispositif de montage selon l'invention.
- La figure 2 est une vue en coupe selon le plan II-II du dispositif de montage de la figure 1.

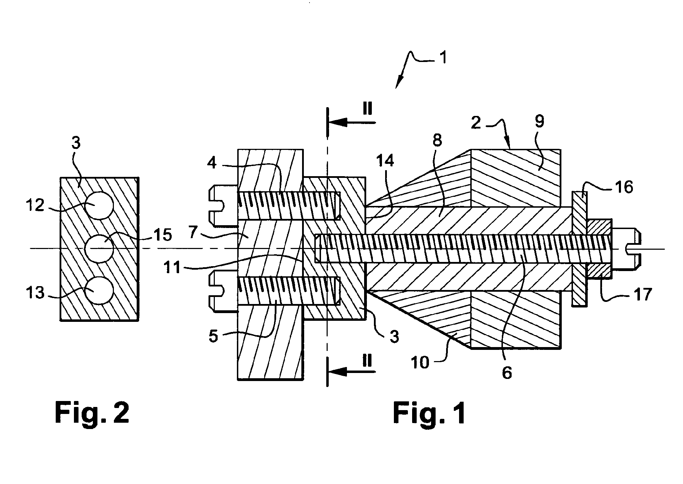

En se référant à la figure 1, un dispositif de montage 1, permettant de fixer un actionneur 2 antivibratoire à la caisse d'un véhicule automobile, comprend une pièce intermédiaire 3 et trois vis 4,5,6 de fixation, deux vis 4,5 assurant la solidarisation de la pièce 3 à une paroi 7 de la caisse, et la troisième vis 6 fixant ledit actionneur 2 à ladite pièce 3. L'actionneur 2 comprend un noyau de fer doux 8 de forme cylindrique et possédant un canal central, autour duquel sont placés une bobine 9 cylindrique creuse, et un ressort en caoutchouc 10 de forme conique. Ledit ressort 10 est interposé entre la pièce intermédiaire 3 et la bobine 9. Par inversions successives du courant électrique circulant dans la bobine 9, ladite bobine 9 vibre autour du noyau 8 selon son axe longitudinal, ce mouvement de va-et-vient étant notamment entretenu par le ressort 10 en caoutchouc.

En se référant à la figure 2, la pièce intermédiaire 3 a la forme d'un parallélépipède rectangle, possédant une face 11 plane dotée de deux trous borgnes 12,13 taraudés, et dont la face opposée 14 est plane et possède un trou borgne 15 taraudé. Ces trois trous 12,13,15 sont cylindriques, et leurs axes de révolution sont alignés suivant un même plan, qui est perpendiculaire aux deux faces 11,14 planes. Le trou 15 central est prévu pour accueillir la vis 6 de fixation de l'actionneur 2 à la pièce 3, les deux trous extrêmes 12,13 étant prévus pour les vis 4,5 de solidarisation de la pièce 3 à la paroi 7. Les trois vis 4,5,6 possèdent chacune une tête élargie, dotée d'une fente, destinée à recevoir un outillage de vissage ou dévissage.

La vis 6 reliant la pièce intermédiaire 3 à l'actionneur 2, est logée dans le canal central du noyau de fer doux 8. Le noyau de fer doux 8 est bloqué en translation autour de la vis 6, au moyen d'une rondelle 16 évasée et d'un écrou 17, placés à l'extrémité dudit noyau 8, qui est opposée à celle qui fait face à la pièce intermédiaire 3. L'actionneur 2 se retrouve au contact de la pièce intermédiaire 3, qui elle-même est au contact de la paroi 7. D'un côté de la paroi 7, sont situés la pièce intermédiaire 3 et l'actionneur 2, la tête de la vis 6 reliant ces deux éléments 2,3 se retrouvant en position distale par rapport à la paroi 7, et, de l'autre coté de ladite paroi 7, émergent les têtes des deux vis 4,5 servant à fixer la pièce intermédiaire 3 à ladite paroi 7.

Les opérations de montage et démontage de l'actionneur 2 suivent les étapes suivantes : l'actionneur 2, constitué du noyau de fer doux 8, de la bobine 9, du ressort en caoutchouc 11, est préalablement fixé à la pièce intermédiaire 3 au moyen de la vis 6, de la rondelle 16 et de l'écrou 17. L'ensemble comportant tous ces éléments est alors monté sur la paroi 7 par l'intermédiaire des deux vis 4,5 solidarisant la pièce intermédiaire 3 à ladite paroi 7. Le démontage a lieu de l'autre coté de la paroi 7, grâce à la vis 6 reliant l'actionneur 2 à la pièce intermédiaire 3 et dont la tête émerge dudit actionneur 2. De cette manière, l'actionneur 2 est séparé de la pièce intermédiaire 3, qui reste fixée à la paroi 7.

## Revendications

1. Ensemble comportant un actionneur (2) antivibratoire, une paroi d'une caisse d'un véhicule automobile (7), et un dispositif (1) de montage de l'actionneur antivibratoire sur la paroi (7), ladite paroi (7) séparant un premier espace d'un deuxième espace, **caractérisé en ce que** ledit dispositif (1) implique une pièce intermédiaire (3) indépendante, située dans le premier espace, entre l'actionneur (2) et la paroi (7), ladite pièce (3) étant solidarisée, d'une part, à la paroi (7) au moyen de deux premières vis (4,5) dont la tête émerge dans le deuxième espace, et, d'autre part, à l'actionneur (2) au moyen d'une deuxième vis (6), dont la tête émerge dudit actionneur (2) dans le premier espace, les vis (4,5,6) de fixation de la pièce intermédiaire (3) sur la paroi (7) et sur l'actionneur (2), étant parallèles entre elles.

2. Ensemble selon la revendication 1, **caractérisé en ce que** la pièce intermédiaire (3) est au contact de la paroi (7).

3. Ensemble selon l'une quelconque des revendications 1 ou 2, **caractérisé en ce que** la pièce intermédiaire (3) est au contact de l'actionneur (2).

4. Ensemble selon l'une quelconque des revendications 1 ou 3, **caractérisé en ce que** la pièce intermédiaire (3) comporte deux faces (11,14) parallèles et opposées, une face (11) présentant deux trous (12,13) borgnes taraudés, et l'autre face (14) possédant un trou (15) borgne taraudé.

5. Ensemble selon la revendication 4, **caractérisé en ce que** les axes des trois trous (12,13,15) sont alignés dans un même plan, qui est perpendiculaire aux deux faces (11,14).

6. Ensemble selon l'une quelconque des revendications 4 ou 5, **caractérisé en ce qu'**il existe une multiplicité de plans parallèles aux deux faces (11,14) et coupant à la fois les axes des trois trous (12,13,15).

7. Ensemble selon l'une quelconque des revendications précédentes, **caractérisé en ce que** l'actionneur (2) antivibratoire pour véhicule automobile comprend un noyau (8) en fer doux possédant un canal central, ledit noyau (8) étant entouré par un ressort (10) en caoutchouc et une bobine (9), et **en ce que** la une pièce intermédiaire (3) est reliée au noyau (8) de fer doux par l'intermédiaire d'une vis (6) de fixation, logée dans le canal central.

8. Ensemble selon la revendication 7, **caractérisé en ce que** le noyau (8) de fer doux est bloqué en translation autour de la vis (6), par l'intermédiaire d'une rondelle (16) élargie et d'un écrou (17).

9. Ensemble selon l'une quelconque des revendications 7 ou 8, **caractérisé en ce que** le ressort (10) en caoutchouc a une forme conique et est interposé entre la pièce intermédiaire (3) et la bobine (9).

## Claims

1. Assembly comprising an anti-vibration actuator (2), a wall (7) of a body of a motor vehicle, and a device (1) for mounting the anti-vibration actuator on the wall (7), the said wall (7) separating a first space from a second space, **characterized in that** the said device (1) involves an independent intermediate part (3), situated in the first space, between the actuator (2) and the wall (7), the said part (3) being secured, on the one hand, to the wall (7) by means of two first screws (4, 5), the head of which emerges in the second space, and, on the other hand, to the actuator (2) by means of a second screw (6), the head of which emerges from the said actuator (2) in the first space, the fixing screws (4, 5, 6) of the intermediate part (3) on the wall (7) and on the actuator (2) being parallel with each other.

2. Assembly according to Claim 1, **characterized in that** the intermediate part (3) is in contact with the wall (7).

3. Assembly according to any one of Claims 1 or 2, **characterized in that** the intermediate part (3) is in contact with the actuator (2).

4. Assembly according to any one of Claims 1 or 3, **characterized in that** the intermediate part (3) comprises two faces (11, 14), parallel and opposite, one face (11) having two blind tapped holes (12, 13), and the other face (14) having one blind tapped hole (15).

5. Assembly according to Claim 4, **characterized in that** the axes of the three holes (12, 13, 15) are aligned in the same plane, which is perpendicular to the two faces (11, 14).

6. Assembly according to any one of Claims 4 or 5, **characterized in that** a multiplicity of planes exists parallel to the two faces (11, 14) and intersecting at the same time the axes of the three holes (12, 13, 15).

7. Assembly according to any one of the preceding claims, **characterized in that** the anti-vibration actuator (2) for a motor vehicle comprises a core (8) of soft iron having a central channel, the said core (8) being surrounded by a rubber spring (10) and a spool (9), and **in that** the one intermediate part (3) is connected to the core (8) of soft iron by means of a fixing screw (6), housed in the central channel.

8. Assembly according to Claim 7, **characterized in that** the core (8) of soft iron is locked in translation around the screw (6), by means of an enlarged washer (16) and a nut (17).

9. Assembly according to any one of Claims 7 or 8, **characterized in that** the rubber spring (10) has a conical shape and is interposed between the intermediate part (3) and the spool (9).

## Patentansprüche

1. Einheit, die einen Schwingungsschutz-Stellantrieb (2), eine Wand eines Aufbaus eines Kraftfahrzeugs (7) und eine Vorrichtung (1) zum Montieren des Schwingungsschutz-Stellantriebs auf die Wand (7) aufweist, wobei die Wand (7) einen ersten Raum von einem zweiten Raum trennt, **dadurch gekennzeichnet, dass** die Vorrichtung (1) einen unabhängigen Zwischenteil (3) einbezieht, der sich in dem ersten Raum zwischen dem Stellantrieb (2) und der Wand (7) befindet, wobei der Teil (3) einerseits mit der Wand (7) mittels zweier erster Schrauben (4, 5), deren Kopf in den zweiten Raum ragt, und andererseits mit dem Stellantrieb (2) mittels einer zweiten Schraube (6), deren Kopf aus dem Stellantrieb (2) in den ersten Raum ragt, fest verbunden ist, wobei die Befestigungsschrauben (4, 5, 6) des Zwischenteils (3) auf der Wand (7) und auf dem Stellantrieb (2) untereinander parallel sind.

2. Einheit nach Anspruch 1, **dadurch gekennzeichnet, dass** der Zwischenteil (3) mit der Wand (7) in Berührung ist.

3. Einheit nach einem der Ansprüche 1 oder 2, **dadurch gekennzeichnet, dass** der Zwischenteil (3) mit dem Stellantrieb (2) in Berührung ist.

4. Einheit nach einem der Ansprüche 1 oder 3, **dadurch gekennzeichnet, dass** der Zwischenteil (3) zwei parallele und entgegen gesetzte Seiten (11, 14) aufweist, wobei eine Seite (11) zwei Innengewindesacklöcher (12, 13) aufweist und die andere Seite (14) ein Innengewindesackloch (15) besitzt.

5. Einheit nach Anspruch 4, **dadurch gekennzeichnet, dass** die Achsen der drei Löcher (12, 13, 15) in einer gleichen Ebene ausgerichtet sind, die zu den Seiten (11, 14) senkrecht ist.

6. Einheit nach einem der Ansprüche 4 oder 5, **dadurch gekennzeichnet, dass** mehrere Ebenen existieren, die zu den zwei Seiten (11, 14) parallel sind und gleichzeitig die Achsen der drei Löcher (12, 13, 15) schneiden.

7. Einheit nach einem der vorhergehenden Ansprüche, **dadurch gekennzeichnet, dass** der Schwingungsschutz-Stellantrieb (2) für Kraftfahrzeug einen Kern (8) aus Weicheisen aufweist, der einen zentralen Kanal besitzt, wobei der Kern (8) von einer Feder (10) aus Kautschuk und einer Spule (9) umgeben ist, und dass der Zwischenteil (3) mit dem Kern (8) aus Weicheisen über eine Befestigungsschraube (6), die in dem zentralen Kanal untergebracht ist, verbunden ist.

8. Einheit nach Anspruch 7, **dadurch gekennzeichnet, dass** der Kern (8) aus Weicheisen in Verschiebung um die Schraube (6) über eine verbreiterte Unterlegscheibe (16) und eine Mutter (17) blockiert ist.

9. Einheit nach einem der Ansprüche 7 oder 8, **dadurch gekennzeichnet, dass** die Feder (10) aus Kautschuk eine Kegelform hat und zwischen den Zwischenteil (3) und die Spule (9) eingefügt ist.
